# EUROPÄISCHE PATENTANMELDUNG

(11) **EP 1 871 036 A1**
(43) Veröffentlichungstag der Anmeldung: **26.12.2007**
(21) Anmeldenummer: 07011935.9
(22) Anmeldetag: 19.06.2007
(51) Int. Cl.: H04L 9/32

(54) **Verfahren, Transporter und System zum sicheren Datenaustausch**

(30) Priorität: 23.06.2006 DE 102006030767
(71) Anmelder: ATMEL Germany GmbH, 74072 Heilbronn (DE)
(72) Erfinder: Friedrich, Ulrich, 74248 Ellhofen (DE); Pangels, Michael, 71642 Ludwigsburg (DE); Masuch, Jens, 74081 Heilbronn (DE); Fischer, Martin, 74629 Pfedelbach (DE); Ziebertz, Dirk, 74246 Eberstadt (DE)
(74) Vertreter: Patentanwälte Ruff, Wilhelm, Beier, Dauster & Partner

(57) **Zusammenfassung**

Die Erfindung betrifft ein Verfahren zum Datenaustausch, wobei ein erster Code (RN1) durch einen Transponder (T) generiert wird, der an eine Basisstation (B) übertragen wird, eine erste Übertragungsinformation von der Basisstation (B) generiert wird, indem ein Basisstation-Code (RRZ) mit einer ersten Kennung und dem ersten Zufallszahlen-Code (RN1) kodiert wird, die erste Übertragungsinformation an den Transponder (T) übertragen und der Basisstation-Code durch den Transponder (T) extrahiert wird, ein zweiter Code (RN2) durch den Transponder (T) generiert wird, der auf zugehörige Anfrage von der Basisstation (B) an diese übertragen wird, wobei vor einer Übertragung an die Basisstation (B) der zweite Code (RN2) mit dem extrahierten Basisstation-Code kodiert wird, eine zweite kodierte Übertragungsinformation umfassend eine zweite Kennung von der Basisstation (B) unter Verwendung des zweiten Codes (RN2) generiert und an den Transponder (T) übertragen wird und mindestens ein Speicherbereich des Transponders für Schreib- und/oder Lesezugriffe freigegeben wird, nachdem die zweite Kennung als gültig verifiziert wurde. Die Erfindung betrifft weiter einen Transponder (T) und ein System für einen sicheren Datenaustausch.

## Beschreibung

Die Erfindung betrifft ein Verfahren zum sicheren Datenaustausch zwischen einer Basisstation und einem Transponder, insbesondere einem passiven oder passiven, rückstreubasierten Transponder, wobei ein Zugangspasswort des Transponders in eine erste Kennung und eine zweite Kennung unterteilt wird, die bei einer Übertragung des Zugangspassworts durch die Basisstation an den Transponder aufeinanderfolgend übertragen werden. Die Erfindung betrifft weiter einen Transponder und ein System für einen sicheren Datenaustausch.

Das Verfahren zum sicheren Datenaustausch kann dabei in einem Zugriffsteuerungsverfahren implementiert sein. Derartige Zugriffssteuerungsverfahren finden beispielsweise bei kontaktlosen Identifikationssystemen oder so genannten Radio-Frequency-Identification (RFID)-Systemen Verwendung. Ein derartiges System besteht üblicherweise aus einer Basisstation bzw. einem Lesegerät oder einer Leseeinheit und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

In dem Normungsvorschlag ISO/lEC_CD 18000-6C vom 07.01.2005 ist ein Zugriffssteuerungsverfahren für Transponder beschrieben. Der Transponder wird hierbei zunächst in einem Auswahl- bzw. Arbitrierungsverfahren aus einer Menge von Transpondern ausgewählt. Bei dem beschriebenen Auswahlverfahren handelt es sich um ein stochastisches Verfahren in Form eines slotbasierten ALOHA-Verfahrens. Derartige Auswahlverfahren sind ausführlich beispielsweise in dem Lehrbuch Klaus Finkenzeller, RFID-Handbuch, 3. Aufl., HANSER, 2002, beschrieben.

Der Normungsvorschlag sieht vor, dass auf Basisstationen und/oder Transpondern Zugangsbefehle (access command) und zugehörige Routinen implementiert sein können. Der Zugangsbefehl ist dabei eine festgelegte 8-Bit Sequenz. Durch den Zugangsbefehl fordert die Basisstation einen Lese- und/oder Schreibzugriff auf einen passwortgeschützten Bereich des Transponders an. Für einen Passwortschutz verfügen eine Basisstation und ein Transponder über symmetrische (Zugangs-) Passwörter. Gemäß dem Normierungsvorschlag handelt es sich bei dem symmetrischen Zugangspasswort (access password) um ein 32-Bit-Passwort. Für einen Lese- und/oder Schreibzugriff auf einen passwortgeschützten Transponder und/oder einen passwortgeschützten Teilbereich eines Transponders werden zwei Zugangsdatensequenzen oder Zugangstelegramme von der Basisstation an den Transponder übertragen. Die beiden Zugangsdatensequenzen oder Zugangstelegramme umfassen den Zugangsbefehl sowie ein erstes Teilpasswort bzw. ein zweites Teilpasswort. Das erste Teilpasswort entspricht dabei einer ersten Hälfte des symmetrischen Passworts. Das zweite Teilpasswort entspricht einer zweiten Hälfte des symmetrischen Passworts.

Um zu Verhindern, dass die Zugangspasswörter bei der Übertragung im Vorwärtslink oder Vorwärtskanal, d.h. bei einer Übertragung von der Basisstation an den Transponder, durch Dritte abgehört werden, werden die Teilpasswörter jeweils mit einer Zufallszahl verschlüsselt. Hierfür ist vorgesehen, dass der Transponder geeignete Mittel zum Generieren einer Zufallszahl aufweist und diese auf Anfrage an die Basisstation überträgt. Für eine Erhöhung der Sicherheit soll vermieden werden, dass beide Teilpasswörter mit der gleichen Zufallszahl verschlüsselt werden.

Anstelle des Zugangspassworts kann auch ein ebenfalls gemäß Normungsvorschlag auf den Transponder gespeichertes Kill-Passwort durch ein ähnliches Verfahren übertragen werden. Durch den Kill-Befehl wird der Transponder gemäß Normungsvorschlag dauerhaft stillgelegt (getötet).

Symmetrische Passwörter müssen allen beteiligten Firmen für einen Zugriff auf den Transponder bekannt gemacht werden. Sie müssen weiter auch Firmen bekannt gemacht werden, welche die Transponder einrichten. Um die sich daraus ergebende Sicherheitslücke zu schließen, ist es bekannt, eine Hash-Funktion in das Verfahren aufzunehmen. Dabei ist auf dem Transponder lediglich ein Hash-Wert des ersten Teilpassworts und/oder des zweiten Teilpassworts abgelegt. Der Transponder weist Mittel auf, durch welche ein Hash-Wert eines empfangenen Passworts ermittelbar und mit dem gespeicherten Wert vergleichbar ist.

Die Basisstation sendet im Regelfall mit einem hohen Pegel, so dass ein Mithörer die drahtlose Datenübertragung von der Basisstation zu dem Transponder über größere Entfernungen, beispielsweise in einem Radius von einem Kilometer, mithören kann. Eine Sicherung des Vorwärtskanals ist daher besonders wichtig. Die (Teil-)Passwörter werden daher wie oben beschrieben im Vorwärtskanal verschlüsselt übertragen.

Die bekannten Verfahren für eine Anforderung eines Lese- und/oder Schreibzugriffs auf einen Transponder sehen jedoch keine Sicherung des Rückwärtslinks oder Rückkanals, d.h. der Datenübertragung vom Transponder zu der Basisstation, vor.

Der Erfindung liegt die Aufgabe zugrunde, ein Verfahren zum sicheren Datenaustausch zwischen einer Basisstation und einem Transponder für eine Zugriffssteuerung zur Verfügung zu stellen, das eine erhöhte Sicherheit gegen ein Abhören aufweist, sowie einen Transponder und ein System mit einem höheren beidseitigen Sicherheitslevel.

Diese Aufgabe wird gelöst durch die Gegenstände der Ansprüche 1, 11 und 14. Weitere vorteilhafte Ausgestaltungen der Erfindung ergeben sich aus den Unteransprüchen.

Erfindungsgemäß wird bei einem Verfahren zum sicheren Datenaustausch zwischen einer Basisstation und einem Transponder, insbesondere einem passiven oder passiven, rückstreubasierten Transponder, ein Zugangspasswort des Transponders mindestens in eine erste Kennung und eine zweite Kennung unterteilt, die bei einer Übertragung des Zugangspassworts durch die Basisstation an den Transponder aufeinanderfolgend übertragen werden, wobei die erste Kennung und die zweite Kennung und/oder ein der zweiten Kennung zugeordneter Prüfwert in einem nichtflüchtigen Speicher des Transponders für einen Passwortvergleich abgespeichert sind. Erfindungsgemäß wird ein erster Code durch den Transponder bereitgestellt, der auf zugehörige Anfrage von der Basisstation an diese übertragen wird, eine erste kodierte Übertragungsinformation umfassend die erste Kennung von der Basisstation unter Verwendung des ersten Codes generiert und an den Transponder übertragen, ein zweiter Code durch den Transponder bereitgestellt, der auf zugehörige Anfrage von der Basisstation an diese übertragen wird, und eine zweite kodierte Übertragungsinformation umfassend die zweite Kennung von der Basisstation unter Verwendung des zweiten Codes generiert und an den Transponder übertragen. Dabei wird erfindungsgemäß weiter ein Basisstation-Code von der Basisstation generiert. Die erste kodierte Übertragungsinformation wird von der Basisstation generiert, indem der Basisstation-Code mit der ersten Kennung und dem ersten Zufallszahlen-Code kodiert wird. Der Basisstation-Code wird durch den Transponder unter Annahme einer korrekten Übertragung der ersten Kennung extrahiert. Der zweite Code wird vor einer Übertragung an die Basisstation mit dem extrahierten Basisstation-Code kodiert und kodiert an die Basisstation übertragen. Die zweite Kennung wird durch den Transponder aus der zweiten kodierten Übertragungsinformation extrahiert und verifiziert und mindestens ein Speicherbereich des Transponders wird für Schreib- und/oder Lesezugriffe freigegeben und/oder dauerhaft gesperrt, nachdem die zweite Kennung als gültig verifiziert wurde.

Durch den Basisstation-Code ist der Rückkanal, d.h. eine Datenübertragung von dem Transponder an die Basisstation, kodierbar. Da der Basisstation-Code der Basisstation bekannt ist, sind die kodiert von dem Transponder übertragenen Daten durch die Basisstation entschlüsselbar. Der Basisstation-Code wird vorzugsweise zu keiner Zeit im Klartext übertragen, so dass ein direktes Abhören des Basisstations-Codes durch Dritte zu keiner Zeit möglich ist.

Um den Basisstation-Code dem Transponder zur Verfügung zu stellen, wird dieser unter Verwendung der ersten Kennung und des ersten, durch den Transponder bereitgestellten Codes zu einer ersten kodierten Übertragungsinformation verknüpft. Der erste Code wurde dabei zuvor im Klartext übertragen. Er konnte daher durch einen Mithörer im Nahbereich abgehört werden. Ohne Kenntnis des Basisstation-Codes ist jedoch eine Extraktion der ersten Kennung aus der ersten kodierten Übertragungsinformation nicht möglich. Auf dem Transponder erfolgt eine Extraktion des Basisstation-Codes aus der ersten Übertragungsinformation unter Verwendung der dem Transponder bekannten ersten Kennung. Handelt es sich bei der Basisstation um einen Angreifer, dem die erste Kennung nicht bekannt ist, und der eine beliebige Zahl als vermeintlich erste kodierte Übertragsinformation an den Transponder sendet, so ist dies an dieser Stelle durch den Transponder nicht feststellbar. Unabhängig von einer Richtigkeit der kodiert übertragenen, ersten Kennung wird der Transponder einen vermeintlichen Basisstation-Code aus den empfangenen Daten extrahieren. Eine Verifikation der ersten Kennung erfolgt erfindungsgemäß damit nicht direkt, sondern indirekt, durch die Extraktion und Verifikation der zweiten Kennung oder weiteren Kennungen, wobei ein Schlüssel oder Code zur Verschlüsselung der zweiten oder weiteren Kennung(en) von der ersten Kennung abhängt.

Dadurch wird ein mehrstufiges Verfahren geschaffen, durch das eine beidseitige Kodierung der Datenübertragung möglich ist, und das in eine bekannte Routine für eine Zugriffssteuerung einfach integrierbar ist.

Dabei handelt es sich in einer vorteilhaften Ausführungsform um ein 2-stufiges Verfahren, wobei die erste Kennung und die zweite Kennung aufeinanderfolgend übertragen werden. Zwischen einer Übertragung der ersten Kennung und der zweiten Kennung ist es möglich, dass weitere Signale, beispielsweise sogenannte Acknowledge- oder Bestätigungssignale übertragen werden. Es ist weiter denkbar, das Zugangspasswort oder mehrere Zugangspasswörter in mehr als zwei Kennungen zu unterteilen und diese entsprechende zu übertragen, um durch weitere Stufen die Sicherheit zu erhöhen.

In einer Ausgestaltung der Erfindung wird durch ein Konfigurationsbit in dem Transponder signalisiert, ob die zweite Kennung auf dem Transponder als Prüfwert oder im Klartext gespeichert ist. Die zweite Kennung kann direkt oder als Prüfwert, insbesondere als Hash-Wert, auf dem Transponder abgelegt sein. Um das Verfahren unabhängig von einer Speicherart der zweiten Kennung auf dem Transponder einsetzen zu können, wird die Speicherart der Basisstation durch ein Konfigurationsbit mitgeteilt, so dass eine entsprechende Routine zur Ermittlung des Prüfwerts aus der übertragenen zweiten Kennung in dem Verfahren vorgesehen wird.

In einer weiteren Ausgestaltung werden der erste Code, der zweite Code und/oder der Basisstation-Code durch Zufallszahlen generiert. Zufallszahlen bieten eine einfach zu implementierende Basis für eine Vielzahl an kryptografischen Verfahren. Die Zufallszahlen können dabei durch geeignete Mittel softwaretechnisch und/oder hardwaretechnisch generiert werden.

In Weiterführung der Erfindung werden für eine Kodierung Daten durch eine logische Verknüpfung, insbesondere eine XOR Verknüpfung, verknüpft. Logische Verknüpfungen sind durch einfache Mittel auch auf passiven, rückstreubasierten Transpondern umsetzbar und benötigen nur wenig Energie.

In einer weiteren Ausgestaltung wird der Basisstation-Code als Vorladewert für eine Zufallszahlenreihe verwendet, wobei die Schreib- und/oder Lesezugriffe auf den Transponder durch die Zufallszahlenreihe kodiert werden. Je nach Art der Zufallszahlenreihen kann nach einer bestimmten Abfolge an Zufallszahlen eine Wiederholung auftreten. Durch geeignete Auswahl des (Pseudo-) Zufallszahlenreihen-Generators ist jedoch sichergestellt, dass die Wiederholung erst nach einer ausreichend langen Zeit stattfindet.

In Weiterführung der Erfindung wird die Zufallszahlenreihe durch ein linear rückgekoppeltes Schieberegister (LFSR)-Verfahren generiert. Das Schieberegister hat eine Länge von n Bits und weist eine beliebige Anzahl an Abzweigungen auf. Bei geeigneter Wahl und/oder Anzahl der Abzweigungen ist eine maximale Periodenlänge bis zu einer Wiederholung der (Pseudo-) Zufallszahlenfolge von bis zu 2*ⁿ* - 1 möglich. Zur Initialisierung wird das Schieberegister mit dem Basisstation-Code "geladen", welcher eine beliebige Zahl ungleich Null sein kann.

In einer weiteren Ausführungsform wird durch ein Signal in einem Header eines Übertragungstelegramms der Basisstation signalisiert, dass die erste Kennung mit dem Basisstation-Code kodiert ist. Üblicherweise werden Daten in sogenannten Übertragungstelegrammen übertragen, wobei einer Datensequenz Kommandobits, Erkennungsbits oder andere Signale vorausgehen. Um das erfindungsgemäße Verfahren vielfältig einsetzen zu können, ist es denkbar, eine Kodierung mittels dem Basisstation-Code anderen Teilnehmern des Systems anzuzeigen, so dass eine Kombination in einem System mit Teilnehmern ohne die zusätzliche Sicherung ebenfalls möglich ist.

In einer Weiterführung der Erfindung wird die Kodierung durch ein gesetztes Bit im Header signalisiert. In einer Ausführungsform wird hierfür eine neue Kommandosequenz, beispielsweise ein Benutzer-Befehl, verwendet.

In einer weiteren Ausgestaltung der Erfindung wird eine Übertragung der ersten kodierten Übertragungsinformation durch einen Handle quittiert. Der handle kann, wie beispielsweise in dem Normierungsvorschlag beschrieben, für die nachfolgende Kommunikation als Identifizierung verwendet werden.

In Weiterbildung wird nach Empfang des Handle der zweite Code unter Verwendung des Handle angefordert.

Die Aufgabe wird weiter gelöst durch einen Transponder für einen sicheren Datenaustausch mit einer Basisstation, insbesondere einen passiven oder passiven, rückstreubasierten Transponder, wobei mindestens eine erste Kennung und eine zweite Kennung und/oder ein der zweiten Kennung zugeordneter Prüfwert in einem nichtflüchtigen Speicher des Transponders gespeichert sind und ein erster und ein zweiter Code durch den Transponder durch geeignete Mittel bereitstellbar sind. Erfindungsgemäß umfasst der Transponder geeignet Mittel, so dass durch den Transponder ein Basisstation-Code aus einer empfangenen ersten kodierten Übertragungsinformation unter Kenntnis der ersten Kennung und des ersten Codes extrahierbar ist, der zweite Code für eine Übertragung durch den Transponder mittels des Basisstation-Code kodierbar ist und die zweite Kennung mittels des zweiten Codes aus einer empfangenen zweiten kodierten Übertragungsinformation extrahierbar und verifizierbar ist, wobei mindestens ein Speicherbereich des Transponders für Schreib- und/oder Lesezugriffe freigegeben oder dauerhaft gesperrt ist, nachdem die zweite Kennung als gültig verifiziert ist. Durch den Transponder ist somit eine Verschlüsselung der Datenübertragung im Rückwärtslink möglich.

In einer Ausgestaltung umfasst der Transponder Mittel, so dass durch den Transponder ein Prüfwert aus der empfangenen zweiten Kennung für einen Vergleich mit dem im Transponder gespeicherten Prüfwert generierbar ist. Auf dem Transponder ist dabei keine Speicherung der zweiten Kennung im Klartext notwendig. Hersteller oder Einrichter der Transponder müssen daher auch keine Kenntnis über ein Zugangspasswort auf den Transponder erhalten.

In einer weiteren Ausgestaltung sind an dem Transponder Mittel vorhanden, durch die ein Bit aus einem Header eines empfangenen Signals lesbar ist, und durch einen zugehörigen Wert des Bits eine Extraktion des Basisstation-Codes aktivierbar ist. Der Transponder kann somit auch mit Basisstationen kommunizieren, welche keine Verschlüsselung des Rückwärtskanals implementiert haben.

Die Aufgabe wird weiter gelöst durch ein System zum sicheren Datenaustausch umfassend eine Basisstation und einen erfindungsgemäßen Transponder, wobei ein erster Code auf dem Transponder bereitstellbar ist, der auf zugehörige Anfrage von der Basisstation an diese übertragbar ist, ein Basisstation-Code von der Basisstation generierbar ist, eine erste kodierte Übertragungsinformation aus der ersten Kennung, dem Basisstation-Code und dem ersten Code von der Basisstation generierbar und an den Transponder übertragbar ist, der Basisstation-Code durch den Transponder unter Verwendung der ersten Kennung extrahierbar ist, ein zweiter Code auf dem Transponder bereitstellbar, mit dem Basisstation-Code verschlüsselbar und an die Basisstation übertragbar ist, eine zweite kodierte Übertragungsinformation aus der zweiten Kennung und dem zweiten Code von der Basisstation generierbar und an den Transponder übertragbar ist, die zweite Kennung durch den Transponder aus der zweiten kodierten Übertragungsinformation extrahierbar und verifizierbar ist und mindestens ein Speicherbereich des Transponders für Schreib- und/oder Lesezugriffe freigegeben oder dauerhaft gesperrt ist, nachdem die zweite Kennung als gültig verifiziert ist.

Weitere Vorteile der Erfindung ergeben sich aus der nachfolgenden Beschreibung von Ausführungsbeispielen der Erfindung, die in den Zeichnungen dargestellt sind. Für gleiche Bauteile werden dabei einheitliche Bezugszeichen verwendet.

In den Zeichnungen zeigen:
- Fig. 1: eine schematische Darstellung eines Systems zur drahtlosen Datenübertragung und
- Fig. 2: eine schematische Darstellung eines Verfahrens zur drahtlosen Datenübertragung mit beidseitiger Verschlüsselung.

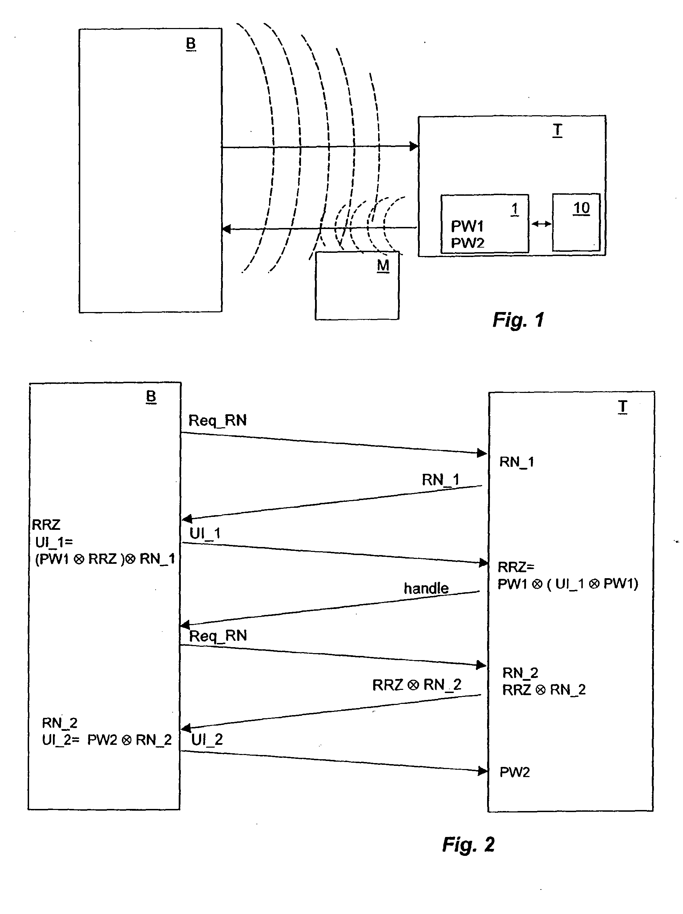

Fig. 1 zeigt schematisch ein System umfassend eine Basisstation B und einen Transponder T, welche drahtlos miteinander kommunizieren. Der dargestellte Transponder T weist einen Speicherbereich 10 auf, welcher durch ein Zugangspasswort geschützt ist. Der Transponder T kann weiter nicht dargestellte Speicherbereich aufweisen, welche durch das gleiche Zugangspasswort oder ein weiteres Zugangspasswort geschützt sind oder nicht passwortgeschützt sind.

Das Zugangspasswort ist in eine erste Kennung PW1 und eine zweite Kennung PW2 unterteilt, welche in einem nichtflüchtigen Speicher 1 des Transponders Z abgelegt sind. Für eine Anforderung eines Lese- und/oder Schreibzugriffs auf den Speicherbereich 10 des Transponders durch die Basisstation B ist das Zugangspasswort an den Transponder T zu übertragen. Wie schematisch in Fig. 1 angedeutet, erfolgt die Übertragung von der Basisstation zu dem Transponder, d.h. die Datenübertragung in einem Vorwärtskanal, mit einem deutlich höheren Pegel als die Datenübertragung im Rückkanal, d.h. von dem Transponder T zu der Basisstation B. Durch eine geeignete Positionierung ist jedoch das Signal in dem Rückkanal ebenfalls durch einen Mithörer M abhörbar. Erfindungsgemäß werden daher relevante Daten beidseitig verschlüsselt.

Fig. 2 zeigt schematisch einen Ablauf des erfindungsgemäßen Verfahren zum sicheren Datenaustausch, insbesondere zum Übertragen eines Passworts, zwischen einer Basisstation und einem Transponder.

Hierfür sendet die Basisstation B zunächst eine Anforderung für einen Code, insbesondere für eine Zufallszahl. Dabei handelt es sich in der dargestellten Ausführungsform um den Befehl Req_RN gemäß dem bereits genannten Normungsvorschlag. Auf die Anforderung generiert der Transponder T eine Zufallszahl RN_1 und sendet diese an die Basisstation B. Die Basisstation B generiert erfindungsgemäß einen Basisstation-Code RRZ und verknüpft diesen mit der ersten Kennung PW1. Das Ergebnis wird mit der empfangenen Zufallszahl RN_1 zu einer ersten Übertragungsinformation UI_1 verknüpft. Die erste codierte Übertragungsinformation Ul_1 wird an den Transponder T übertragen. Der Transponder T extrahiert unter Kenntnis der Zufallszahl RN_1 und der ersten Kennung PW1 den Basisstation-Code RRZ aus der ersten codierten Übertragungsinformation UI_1. Der Empfang des Basisstation-Codes RRZ wird durch einen Handle quittiert.

Die Basisstation B sendet daraufhin eine zweite Anforderung, zur Übertragung einer zweiten Zufallszahl. Der Transponder T generiert aufgrund der Anforderung eine zweite Zufallszahl RN_2 und verknüpft diese mit dem extrahierten Basisstation-Code RRZ. Die Basisstation B extrahiert die zweite verschlüsselte Zufallszahl RN2 aus den verschlüsselt übertragenen Daten. Anschließend generiert die Basisstation B eine zweite codierte Übertragungsinformation Ul_2 durch Verknüpfung der zweiten Kennung PW2 mit der zweiten Zufallszahl RN2. Die codierte zweite Übertragungsinformation Ul_2 wird an den Transponder T übertragen. Der Transponder extrahiert die zweite Kennung PW2 aus der zweiten codierten Übertragungsinformation UI_2. Die extrahierte Kennung PW2 kann dann direkt mit einer auf dem Transponder abgelegten zweiten Kennung verglichen werden. In einer anderen Ausführungsform wird für den Vergleich ein Prüfwert der extrahierten zweiten Kennung PW2 gebildet.

Außer der ersten Zufallszahl RN1 wird dabei zu keiner Zeit eine Information im Klartext übertragen. Für einen Mithörer sind die nachfolgend übertragenen Daten daher nicht im Klartext sichtbar. Anhand der ersten Zufallszahl ist für den Mithörer ohne Kenntnis des Basisstation-Codes RRZ die erste Kennung PW1 nicht aus der kodierten Übertragungsinformation Ul_1 extrahierbar. Dadurch ist die Sicherheit der Datenübertragung deutlich verbesserbar.

Der übertragene Basisstation-Code RRZ ist vorzugsweise eine Zufallszahl. Es handelt sich bei dem Basisstation-Code RRZ um ein Geheimnis, welches zwischen der Basisstation B und dem Transponder T ausgetauscht wurde. Der Basisstation-Code RRZ kann daher als Grundlage für eine anschließende Verschlüsselung einer Datenübertragung verwendet werden. In einer Ausführungsform ist der Basisstation-Code RRZ als Vorladewert für einen Zufallszahlengenerator verwendbar. Durch die Zufallszahlenfolge, welche dem Transponder T und der Basisstation B bekannt ist, ist so eine sichere Verschlüsselung der Datenübertragung möglich.

Das Verfahren kann beispielsweise für ein RFID-System eingesetzt werden, wobei Transponder Bankkarten, Kreditkarten oder ähnlichen Produkten zugeordnet sind. Dabei ist offensichtlich, dass gespeicherte Daten und damit verbundene Kontoinformationen etc. nicht für beliebige "Leser" oder Basisstationen zugänglich sein sollen. Die Daten sind daher durch ein Zugangspasswort geschützt. Durch das erfindungsgemäße Verfahren ist eine sichere Übertragung des Zugangspassworts in mehreren Stufen, insbesondere wie dargestellt in zwei Stufen, möglich, ohne dass ein unautorisierter Mithörer das Zugangspasswort und/oder Teile davon abhören kann und somit selbst Zugang auf die sicherheitsrelevanten Daten erhalten kann.

Bei Verlust der Karte ist es wünschenswert, die Daten der Karte dauerhaft zu sperren. Hierfür ist beispielsweise die Übertragung eines sogenannten Kill-Passworts erforderlich.

## Patentansprüche

1. Verfahren zum sicheren Datenaustausch zwischen einer Basisstation (B) und einem Transponder, insbesondere einem passiven und/oder rückstreubasierten Transponder, wobei ein Zugangspasswort des Transponders in eine erste Kennung (PW1) und eine zweite Kennung (PW2) unterteilt wird, die bei einer Übertragung des Zugangspassworts durch die Basisstation (B) an den Transponder (T) aufeinanderfolgend übertragen werden, und die erste Kennung (PW1) und die zweite Kennung (PW2) und/oder ein der zweiten Kennung zugeordneter Prüfwert in einem nichtflüchtigen Speicher (1) des Transponders (T) gespeichert werden, bei dem
- ein erster Code durch den Transponder (T) bereitgestellt wird, der auf zugehörige Anfrage von der Basisstation (B) an diese übertragen wird,
- eine erste kodierte Übertragungsinformation (UI_1) umfassend die erste Kennung (PW1) von der Basisstation (B) unter Verwendung des ersten Codes generiert und an den Transponder (T) übertragen wird,
- ein zweiter Code durch den Transponder (T) bereitgestellt wird, der auf zugehörige Anfrage von der Basisstation (B) an diese übertragen wird, und
- eine zweite kodierte Übertragungsinformation (Ul_2) umfassend die zweite Kennung (PW2) von der Basisstation (B) unter Verwendung des zweiten Codes generiert und an den Transponder (T) übertragen wird,
**dadurch gekennzeichnet, dass**
- ein Basisstation-Code (RRZ) von der Basisstation (B) generiert wird,
- die erste Übertragungsinformation (Ul_1) von der Basisstation (B) generiert wird, indem der Basisstation-Code (RRZ) mit der ersten Kennung (PW1) und dem ersten Code kodiert wird,
- der Basisstation-Code (RRZ) durch den Transponder (T) unter Annahme einer korrekten Übertragung der ersten Kennung (PW1) extrahiert wird,
- der zweite Code vor einer Übertragung an die Basisstation (B) mit dem extrahierten Basisstation-Code (RRZ) kodiert wird und kodiert an die Basisstation (B) übertragen wird,
- die zweite Kennung (PW2) durch den Transponder (T) aus der zweiten kodierten Übertragungsinformation (Ul_2) extrahiert und verifiziert wird und
- mindestens ein Speicherbereich (10) des Transponders (T) für Schreib- und/oder Lesezugriffe freigegeben oder dauerhaft gesperrt wird, nachdem die zweite Kennung (PW2) als gültig verifiziert wurde.

2. Verfahren nach Anspruch 1, **dadurch gekennzeichnet, dass** durch ein Konfigurationsbit in dem Transponder (T) signalisiert wird, ob die zweite Kennung (PW2) auf dem Transponder (T) als Prüfwert oder im Klartext gespeichert ist.

3. Verfahren nach Anspruch 1 oder 2, **dadurch gekennzeichnet, dass** der erste Code, der zweite Code und/oder der Basisstation-Code (RRZ) durch Zufallszahlen (RN1, RN2) generiert werden.

4. Verfahren nach einem der vorhergehenden Ansprüche, **dadurch gekennzeichnet, dass** für eine Kodierung Daten durch eine logische Verknüpfung, insbesondere eine XOR Verknüpfung, verknüpft werden.

5. Verfahren nach einem der Ansprüche 1 bis 4, **dadurch gekennzeichnet, dass** der Basisstation-Code (RRZ) als Vorladewert für eine Zufallszahlenreihe verwendet wird, wobei die Schreib- und/oder Lesezugriffe auf den Transponder (T) durch die Zufallszahlenreihe kodiert werden.

6. Verfahren nach Anspruch 5, **dadurch gekennzeichnet, dass** die Zufallszahlenreihe durch ein LFSR-Verfahren generiert wird.

7. Verfahren nach einem der vorhergehenden Ansprüche, **dadurch gekennzeichnet, dass** durch ein Signal in einem Header eines Übertragungstelegramms der Basisstation (B) signalisiert wird, dass die erste Kennung mit dem Basisstation-Code (RRZ) kodiert ist.

8. Verfahren nach Anspruch 7, **dadurch gekennzeichnet, dass** durch ein gesetztes Bit in einem Header eines Übertragungstelegramms der Basisstation (B) signalisiert wird, dass die erste Kennung mit dem Basisstation-Code (RRZ) kodiert ist.

9. Verfahren nach einem der vorhergehenden Ansprüche, **dadurch gekennzeichnet, dass** eine Übertragung der ersten kodierten Übertragungsinformation durch einen Handle quittiert wird.

10. Verfahren nach Anspruch 9, **dadurch gekennzeichnet, dass** nach Empfang des Handle der zweite Code unter Verwendung des Handle angefordert wird.

11. Transponder (T) für einen sicheren Datenaustausch mit einer Basisstation, insbesondere passiver und/oder rückstreubasierter Transponder, wobei eine erste Kennung und eine zweite Kennung und/oder ein der zweiten Kennung zugeordneter Prüfwert in einem nichtflüchtigen Speicher des Transponders gespeichert sind und ein erster und ein zweiter Code durch den Transponder (T) bereitstellbar sind,
**dadurch gekennzeichnet, dass**
- durch den Transponder (T) ein Basisstation-Code (RRZ) aus einer empfangenen ersten kodierten Übertragungsinformation (UI_1) unter Kenntnis der ersten Kennung (PW1) und dem ersten Code extrahierbar ist,
- der zweite Code für eine Übertragung durch den Transponder (T) mittels des Basisstation-Codes (RRZ) kodierbar ist,
- die zweite Kennung (PW2) mittels des zweiten Codes aus einer empfangenen zweiten kodierten Übertragungsinformation (Ul_2) extrahierbar und verifizierbar ist, und
- mindestens ein Speicherbereich (10) des Transponders (T) für Schreib- und/oder Lesezugriffe freigegeben oder dauerhaft gesperrt ist, nachdem die zweite Kennung (PW2) als gültig verifiziert ist.

12. Transponder nach Anspruch 11, **dadurch gekennzeichnet, dass** durch den Transponder (T) ein Prüfwert aus der empfangenen zweiten Kennung (PW2) für einen Vergleich mit dem im Transponder (T) gespeicherten Prüfwert generierbar ist.

13. Transponder nach Anspruch 11 oder 12, **dadurch gekennzeichnet, dass** ein Bit aus einem Header eines empfangenen Signals lesbar ist, und durch einen zugehörigen Wert des Bits eine Extraktion des Basisstation-Codes (RRZ) aktivierbar ist.

14. System zum sicheren Datenaustausch umfassend eine Basisstation (B) und einen Transponder (T) nach einem der Ansprüche 11 bis 13,
**dadurch gekennzeichnet, dass**
- ein erster Code auf dem Transponder (T) bereitstellbar ist, der auf zugehörige Anfrage von der Basisstation (B) an diese übertragbar ist,
- ein Basisstation-Code (RRZ) von der Basisstation (B) generierbar ist,
- eine erste kodierte Übertragungsinformation (Ul_1) aus der ersten Kennung (PW1), dem Basisstation-Code (RRZ) und dem ersten Code von der Basisstation (B) generierbar und an den Transponder (T) übertragbar ist,
- der Basisstation-Code (RRZ) durch den Transponder (T) unter Verwendung der ersten Kennung (PW1) extrahierbar ist,
- ein zweiter Code auf dem Transponder (T) bereitsstellbar, mit dem Basisstation-Code (RRZ) verschlüselbar und an die Basisstation (B) übertragbar ist,
- eine zweite kodierte Übertragungsinformation aus der zweiten Kennung (PW2) und dem zweiten Code von der Basisstation (B) generierbar und an den Transponder (T) übertragbar ist,
- die zweite Kennung (PW2) durch den Transponder (T) aus der zweiten kodierten Übertragungsinformation (UI_2) extrahierbar und verifizierbar ist und
- mindestens ein Speicherbereich (10) des Transponders für Schreib- und/oder Lesezugriffe oder dauerhaft gesperrt freigegeben ist, nachdem die zweite Kennung (PW2) als gültig verifiziert ist.
